# EUROPEAN PATENT APPLICATION

(11) **EP 2 833 692 A1**
(43) Date of publication of application: **04.02.2015**
(21) Application number: 13781533.8
(22) Date of filing: 04.02.2013
(51) Int. Cl.: H04W 74/04

(54) **METHOD, BASE STATION, AND SYSTEM FOR DATA TRANSMISSION**

(30) Priority: 23.04.2012 CN 201210121465
(71) Applicant: Huawei Technologies Co., Ltd., Shenzhen, Guangdong 518129 (CN)
(72) Inventor: CHEN, Dong, Shenzhen Guangdong 518129 (CN); XU, Min, Shenzhen Guangdong 518129 (CN)
(74) Representative: Maiwald Patentanwalts GmbH
(86) International application number: PCT/CN2013/071310
(87) International publication number: WO 2013/159585

(57) **Abstract**

Embodiments of the present application disclose a data transmission method, base station, and system, relate to the field of communications technologies, and can avoid a problem that a macro cell base station cannot receive or correctly demodulate an uplink feedback from a UE. The method of the present application includes: acquiring, by a macro cell base station, uplink feedback information sent by a micro cell base station; and transmitting downlink data to a UE according to the uplink feedback information. The embodiments of the present application are mainly applicable to a data transmission process of a wireless communications system.

## Description

The present application claims priority to Chinese Patent Application No. 201210121465.3, filed with the Chinese Patent Office on April 23, 2012 and entitled "DATA TRANSMISSION METHOD, BASE STATION, AND SYSTEM", which is incorporated herein by reference in its entirety.

### TECHNICAL FIELD

The present application relates to the field of communications technologies, and in particular, to a data transmission method, base station, and system.

### BACKGROUND

The field of wireless communications is confronted with pressure of explosive growth of data services. To increase a network capacity and reduce transmission costs, a heterogeneous network (Heterogeneous Network, Hetnet) technology is proposed in the industry. The Hetnet consists of multiple cells in different sizes and types, and includes macro cells (Macro cell) and micro cells. The micro cell includes a micro cell (Micro cell), a pico cell (Pico Cell), a femto cell (Femto Cell), a cell in a remote radio head (Remote Radio Head, RRH) shape, and the like. By deploying more micro cells in an area with dense traffic, a network capacity of this area can effectively be increased. In addition, a micro cell has a small size and therefore entails relatively low capital expenditure (Capital Expenditure, Capax) and operating expense (Operating Expense, Opex). Therefore, the Hetnet attracts attention from many operators and becomes an important trend of wireless network evolution.

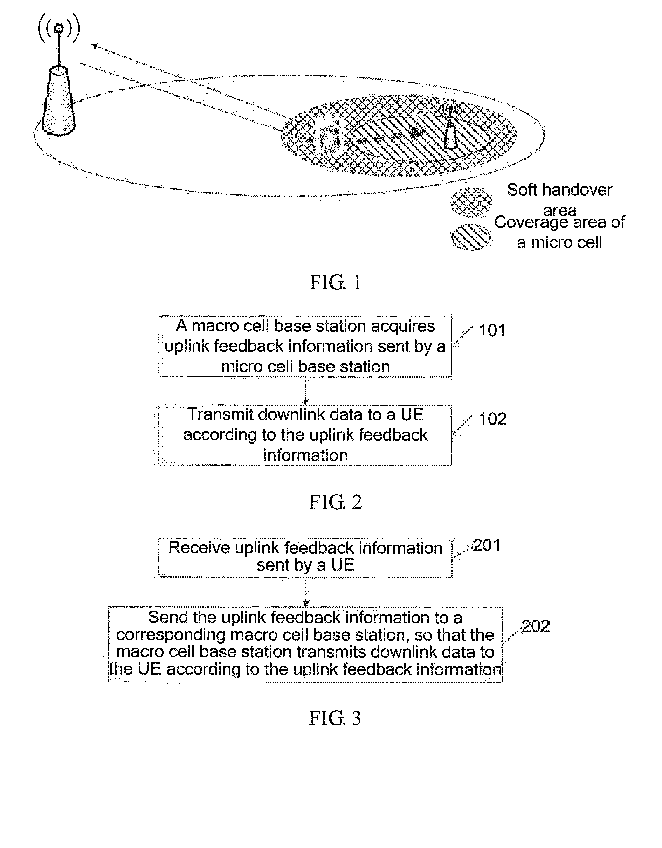

A micro cell and a macro cell may be deployed at a same frequency or may be deployed at different frequencies. When the micro cell and the macro cell are deployed at the same frequency, a co-channel interference problem will occur in an overlapping coverage area of the micro cell and the macro cell. Specifically, as shown in FIG. 1, the outermost circle is a coverage area of the macro cell; the innermost circle is a coverage area of the micro cell; and the annular area between the dashed-line circle and the innermost circle is a soft handover area. In the soft handover area, a UE establishes two connections at the same time for access of both the macro cell and the micro cell. When a UE accessed to the macro cell approaches but does not reach the soft handover area, the UE establishes a connection only to the macro cell. Because a path loss from the UE to a macro cell base station is significantly greater than a path loss from the UE to a micro base station, the UE increases uplink transmit power to improve quality of communication with the macro cell base station, which causes uplink interference to the micro cell and reduces an uplink capacity of the micro cell.

In the prior art, to avoid the problem of co-channel interference between a macro cell and a micro cell, a method of lowering a measurement reporting threshold of the UE and expanding a soft handover area of the macro cell and the micro cell is adopted. In this method, before causing uplink interference to the micro cell, a UE accessed to the macro cell has entered the soft handover area, and the UE adds the micro cell to an active set, that is, the UE establishes a connection to the micro cell. In this way, the UE can make reference to the path loss from the UE to the micro base station and no longer continues to increase the uplink transmit power so as to avoid interference to the micro cell.

However, in a process of implementing the foregoing interference coordination, the inventor finds that the prior art has at least the following problem: After the UE accessed to the macro cell adds the micro cell to the active set in advance, because a path loss of the UE in uplink of the micro cell is relatively low, the UE gradually reduces the uplink transmit power, causing that the macro cell base station cannot receive or cannot correctly demodulate an uplink signal of the UE.

More seriously, for HSDPA, a channel HS-DPCCH used for uplink feedback includes ACK/NACK and CQI information, of which the ACK/NACK is used to feed back a result of a CRC check after data decoding and combining included on a downlink channel HS-PDSCH received by the UE, and the CQI is used to indicate that an estimated size of a transmission block, a modulation scheme, and the number of parallel channels may be correctly received by the UE. The macro cell base station needs to perform downlink data scheduling according to the uplink feedback such as the HS-DPCCH of the UE, and if there is no uplink feedback from the UE, data transmission may be affected.

### SUMMARY

Embodiments of the present application provide a data transmission method, base station, and system, and can avoid a problem that a macro cell base station cannot receive or correctly demodulate an uplink feedback from a UE.

One aspect of the present application provides a data transmission method, which is applicable to a macro cell base station side and includes:
acquiring, by a macro cell base station, uplink feedback information sent by a micro cell base station; and
transmitting downlink data to a UE according to the uplink feedback information.

Another aspect of the present application provides a data transmission method, which is applicable to a micro cell base station side and includes:
receiving uplink feedback information sent by a UE; and
sending the uplink feedback information to a corresponding macro cell base station, so that the macro cell base station transmits downlink data to the UE according to the uplink feedback information.

Another aspect of the present application provides a data transmission method, which is applicable to a macro cell base station side and includes:
when a macro cell base station cannot correctly demodulate or cannot receive uplink feedback information from a UE, adjusting a transmission policy between the macro cell base station and the UE, so that the UE can successfully receive the downlink data; and
performing data transmission with the UE according to the adjusted transmission policy.

Another aspect of the present application provides a macro cell base station, including:
an acquiring unit, configured to acquire uplink feedback information sent by a micro cell base station; and
a transmitting unit, configured to transmit downlink data to a UE according to the uplink feedback information.

Another aspect of the present application provides a micro cell base station, including:
a receiving unit, configured to receive uplink feedback information sent by a UE; and
a sending unit, configured to send the uplink feedback information to a corresponding macro cell base station, so that the macro cell base station transmits downlink data to the UE according to the uplink feedback information.

Another aspect of the present application provides a macro cell base station, including:
an adjusting unit, configured to, when a macro cell base station cannot correctly demodulate or cannot receive uplink feedback information from a UE, adjust a transmission policy between the macro cell base station and the UE, so that the UE can successfully receive the downlink data; and
a transmitting unit, configured to perform data transmission with the UE according to the adjusted transmission policy.

Another aspect of the present application provides a data transmission system, including: a macro cell base station and a micro cell base station, where
the macro cell base station is configured to acquire uplink feedback information sent by the micro cell base station and transmit downlink data to a UE according to the uplink feedback information; and
the micro cell base station is configured to receive uplink feedback information sent by the UE and send the uplink feedback information to a corresponding macro cell base station, so that the macro cell base station transmits downlink data to the UE according to the uplink feedback information.

According to a data transmission method, base station, and system provided in the embodiments of the present application, a macro cell base station can obtain correct uplink feedback information and thereby properly perform downlink data transmission.

### BRIEF DESCRIPTION OF DRAWINGS

To describe the technical solutions in the embodiments of the present application or in the prior art more clearly, the following briefly introduces the accompanying drawings required for describing the embodiments or the prior art. Apparently, the accompanying drawings in the following description merely show some embodiments of the present application, and persons of ordinary skill in the art may still derive other drawings from these accompanying drawings without creative efforts.
FIG. 1 is a schematic diagram of coverage areas of a macro cell and a micro cell in the background of the present application;
FIG. 2 is a flowchart of a data transmission method according to an embodiment of the present application;
FIG. 3 is a flowchart of another data transmission method according to another embodiment of the present application;
FIG. 4 is a flowchart of a data transmission method according to another embodiment of the present application;
FIG. 5(a) is a flowchart of a data transmission method according to another embodiment of the present application;
FIG. 5(b) is a flowchart of another data transmission method according to another embodiment of the present application;
FIG. 6(a) is a schematic diagram of an architecture of a macro cell and a micro cell according to another embodiment of the present application;
FIG. 6(b) is a schematic flowchart of data transmission in architecture 1 according to another embodiment of the present application;
FIG. 7(a) is another schematic diagram of an architecture of a macro cell and a micro cell according to another embodiment of the present application;
FIG. 7(b) is a schematic flowchart of data transmission in architecture 2 according to another embodiment of the present application;
FIG. 8(a) is another schematic diagram of an architecture of a macro cell and a micro cell according to another embodiment of the present application;
FIG. 8(b) is a schematic flowchart of data transmission in architecture 3 according to another embodiment of the present application;
FIG. 9 is a flowchart of a data transmission method according to another embodiment of the present application;
FIG. 10 is a schematic composition diagram of a macro cell base station according to another embodiment of the present application;
FIG. 11 is a schematic composition diagram of another macro cell base station according to another embodiment of the present application;
FIG. 12 is a schematic composition diagram of a micro cell base station according to another embodiment of the present application;
FIG. 13 is a schematic composition diagram of another micro cell base station according to another embodiment of the present application;
FIG. 14 is a schematic composition diagram of a data transmission system according to another embodiment of the present application;
FIG. 15 is a schematic composition diagram of a macro cell base station according to another embodiment of the present application; and
FIG. 16 is a schematic composition diagram of a data transmission system according to another embodiment of the present application.

### DESCRIPTION OF EMBODIMENTS

The following description is intended to describe other than limit the present application. Specific details such as a specified system architecture, interface, and technology are provided to facilitate understanding of the present application. However, persons skilled in the art should understand that, the present application may be implemented in other embodiments without these specific details. In other circumstances, detailed description of an apparatus, a circuit, and a method that are well known is omitted in the interest of keeping the present application condensed.

Technologies described in this specification may be applied to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless) system, a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

The present application is applicable to wireless network systems, such as a UMTS network, a GSM (Global System for Mobile Communications) network, a GPRS (General Packet Radio Service) network, a CDMA2000 (Code Division Multiple Access 2000) network, a TD-SCDMA (Time Division Synchronous Code Division Multiple Access) network, an LTE (Long Term Evolution) network, a WLAN (Wireless Local Area Networks)/WiFi (Wireless Fidelity) network, and a WiMAX (Worldwide Interoperability for Microwave Access) network, and in particular, applicable to a scenario in which micro cell base stations are deployed in these wireless network systems.

Various aspects are described in this specification with reference to a user equipment and/or a base station and/or a base station controller.

The user equipment may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks through a radio access network (such as RAN, radio access network). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, it may be a device such as personal communication service (PCS, Personal Communication Service) phone, a cordless telephone set, a Session Initiation Protocol (SIP) phone, a wireless local loop (WLL, Wireless Local Loop) station, or personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may refer to a device in communication with a wireless terminal via one or more sectors at an air interface in an access network. The base station may be configured to mutually convert a received over-the-air frame and an IP packet and serve as a router between the wireless terminal and a rest portion of the access network, where the rest portion of the access network may include an Internet protocol (IP) network. The base station may also coordinate attribute management of the air interface. For example, the base station may be a base station (BTS, Base Transceiver Station) in GSM or CDMA, may also be a base station (NodeB) in WCDMA, and may further be an evolved NodeB (NodeB, eNB, or e-NodeB, evolutional Node B) in LTE, which is not limited in the present invention.

The base station controller may be a base station controller (BSC, base station controller) in GSM or CDMA, or a radio network controller (RNC, Radio Network Controller) in WCDMA, which is not limited in the present application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

An embodiment of the present application provides a data transmission method, which is applicable to a macro cell base station side, as shown in FIG. 2.

101. A macro cell base station acquires uplink feedback information sent by a micro cell base station.

In this embodiment of the present application, the uplink feedback information refers to uplink feedback information from a UE that is sent by the UE to the micro cell base station. When the UE is in soft handover state, the UE connects to both the macro cell base station and the micro cell base station, and a serving radio network controller (Radio Network Controller, RNC) of the UE is a macro cell RNC. In this case, the macro cell base station may be incapable of correctly demodulating or receiving the uplink feedback information sent by the UE. However, the micro cell base station may receive the uplink feedback information sent by the UE. Therefore, after receiving the uplink feedback information from the UE, the micro cell base station sends the uplink feedback information to a corresponding macro cell base station, and the macro cell base station may acquire, from the micro cell base station, the uplink feedback information sent by the UE to the micro cell base station, so as to properly adjust data transmission.

The micro cell base station may send the uplink feedback information or may send, to the macro cell base station, a statistical result of the uplink feedback information after statistics are performed. Specifically, whether the uplink feedback information is sent in real time, a sending interval, and specific content of the uplink feedback information to be sent may be pre-configured on the micro cell base station or may be instructed and configured by a macro cell control node (macro cell RNC) for the micro cell base station.

102: Transmit downlink data to the UE according to the uplink feedback information.

A data block length and/or downlink transmit power of downlink data transmission may be adjusted according to the uplink feedback information, so as to increase a success rate of receiving the downlink data by the UE.

Another embodiment of the present application further provides a data transmission method, which is applicable to a micro cell base station side, as shown in FIG. 3.

201. Receive uplink feedback information sent by a UE.

In this embodiment of the present application, the UE is in a soft handover area, and a path loss from the UE to a micro cell is much smaller than a path loss from the UE to a macro cell. Because of power control, the UE may reduce transmit power to diminish impact on the micro cell. Therefore, a macro cell base station cannot receive the uplink feedback information from the UE, whereas a micro cell base station can still normally receive the uplink feedback information.

202. Send the uplink feedback information to a corresponding macro cell base station, so that the macro cell base station transmits downlink data to the UE according to the uplink feedback information.

A method for sending the uplink feedback information to the macro cell base station may be sending the received uplink feedback information to the macro cell base station or may be performing statistics on the received uplink feedback information and sending a statistical result to the macro cell base station. It may be understood that the corresponding macro cell base station refers to a macro cell base station to which the UE has currently been accessed, that is, a serving macro cell.

According to a data transmission method provided in this embodiment of the present application, a micro cell base station receives uplink feedback information from a UE, and a macro cell base station acquires the uplink feedback information sent by the micro cell base station. Compared with a technology of adding the micro cell base station to an active set of the UE in advance by expanding a soft handover area in the prior art, this method enables the macro cell base station to obtain correct uplink feedback information, so as to properly perform downlink data transmission.

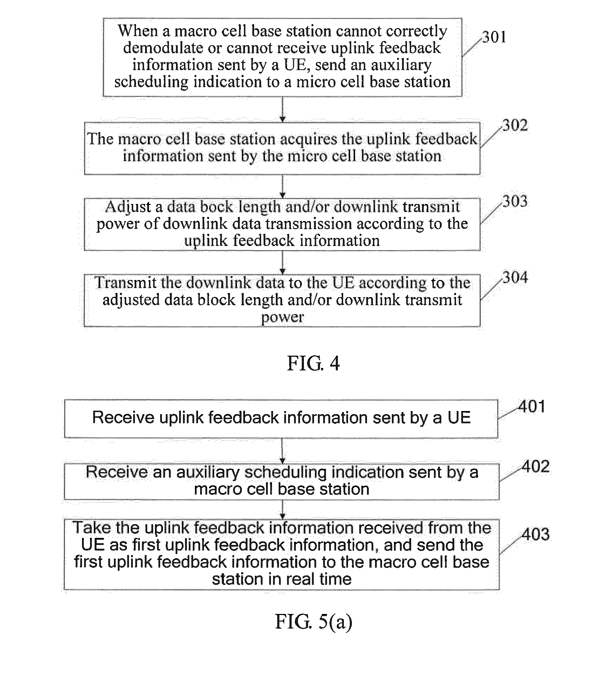

Another embodiment of the present application provides a data transmission method, as shown in FIG. 4.

301. When a macro cell base station cannot correctly demodulate or cannot receive uplink feedback information sent by the UE, send an auxiliary scheduling indication to the micro cell base station.

The uplink feedback information (for example, HS-DPCCH information) is scrambled by using user scrambling code. Following a specified time sequence, the macro cell base station receives uplink data from the UE and descrambles the received uplink data by using scrambling code corresponding to each UE. If no HS-DPCCH information of a corresponding UE is obtained after descrambling, it is considered that the uplink feedback information from the UE cannot be received. Alternatively, HS-DPCCH information of a corresponding UE is obtained by means of descrambling the scrambling code of the UE, but an error is found in the received HS-DPCCH information by using a cyclic redundancy check (Cycle Redundancy Check, CRC); and then it may be considered that the uplink feedback information from the UE cannot be correctly demodulated.

The auxiliary scheduling indication is used to instruct the micro cell base station to start to send the uplink feedback information to the macro cell base station. In addition, before sending the auxiliary scheduling indication, the macro cell base station may further configure, by using another specified indication, specific content of the uplink feedback information and a form of sending the uplink feedback information by the micro cell base station.

302. The macro cell base station acquires the uplink feedback information sent by the micro cell base station.

The uplink feedback information sent by the micro cell base station to the macro cell base station are in two forms, which are respectively first uplink feedback information sent directly after the uplink feedback information from the UE is received and second uplink feedback information obtained after statistics are performed after the uplink feedback information from the UE is received.

Specifically, the uplink feedback information may specifically be: the first uplink feedback information that is received by the micro cell base station from the UE and sent to the macro cell base station. The first uplink feedback information includes at least one of the following: an acknowledgment/negative acknowledgment (ACK/NACK) indicator of a high speed dedicated physical control channel (High-Speed Dedicated Physical Control Channel, HS-DPCCH), a channel quality indicator CQI, and the like.

Alternatively, the uplink feedback information may also specifically be: the second uplink feedback information, which is a statistical result sent to the macro cell base station by the micro cell base station after the micro cell base station performs statistics on the uplink feedback information received from the UE. The second uplink feedback information includes at least one of the following: the number of acknowledgment/negative acknowledgment ACK/NACK indicators, a proportion of the acknowledgment/negative acknowledgment ACK/NACK indicators, an average value of channel quality indicators CQIs, a value of the last CQI, and the like. It may be understood that the value of the last COI refers to a value of a latest CQI fed back by the UE before the micro cell base station sends the uplink feedback information to the macro cell base station at current time.

A specific statistics method is as follows:
If the second uplink feedback information is specifically the number of ACK/NACK indicators, a statistics process is as follows: The micro cell base station receives an ACK/NACK indicator reported by the UE, performs statistics on the number of ACK or NACK indicators in a period of time, and takes the obtained number as the second uplink feedback information.

If the second uplink feedback information is specifically the proportion of the ACK/NACK indicators, the statistics process is as follows: The micro cell base station receives the ACK/NACK indicator reported by the UE; performs statistics on the proportion of the ACK or NACK indicators in a period of time, for example, a percentage of the ACKs may be: the number of the ACKs/(the number of the ACKs + the number of the NACKs) x 100%, and a percentage of the NACKs may be: the number of the NACKs/(the number of the ACKs + the number of the NACKs) x 100%; and takes the percentages as the second uplink feedback information.

If the second uplink feedback information is specifically the average value of the channel quality indicators CQIs, the statistics process is as follows: The micro cell base station receives a CQI reported by the UE, performs statistics on the average value of the CQIs in a period of time, and takes the obtained average value as the second uplink feedback information.

If the second uplink feedback information is specifically the value of the last CQI, the statistics process is as follows: The micro cell base station receives the CQI reported by the UE and takes the value of the last CQI received in a period of time as the second uplink feedback information.

It should be noted that the uplink feedback information may be carried in a control signaling packet of a control plane and transferred by using the control signaling packet. The uplink feedback information may also be carried in a Frame Protocol (Frame Protocol, FP) packet of a data plane and transferred by using the FP packet.

303. Adjust a data block length and/or downlink transmit power of downlink data transmission according to the uplink feedback information, so that the UE can successfully receive the downlink data.

The uplink feedback information from the UE that is acquired by the micro cell base station may represent channel quality of downlink data transmission. For example, when the number or the proportion of the ACKs is greater than a specified threshold, it indicates that the UE is in a good receiving state currently and may correctly receive the downlink data sent by the macro cell base station. Therefore, the macro cell base station may increase a downlink data block length for scheduling of the UE and/or reduce transmit power of the downlink data. Conversely, when the number or the proportion of the ACKs is smaller than a specified threshold, to increase a success rate of receiving the downlink data by the UE, the macro cell base station may reduce the downlink data block length for scheduling of the UE and/or increase the transmit power of the downlink data.

304. Transmit the downlink data to the UE according to the adjusted data block length and/or downlink transmit power.

It should be noted that reference can be made to corresponding content in Embodiment 1 for a detailed explanation of some steps in this embodiment of the present application. Details are not described herein again in this embodiment of the present application.

According to a data transmission method provided in another embodiment of the present application, a micro cell base station receives uplink feedback information from a UE, and a macro cell base station acquires the uplink feedback information sent by the micro cell base station. Compared with a technology of adding the micro cell base station to an active set of the UE in advance by expanding a soft handover area in the prior art, this method enables the macro cell base station to obtain correct uplink feedback information, so as to properly perform downlink data transmission.

Another embodiment of the present application provides a data transmission method, which is applicable to a micro cell base station side, as shown in FIG. 5(a).

401. Receive uplink feedback information sent by a UE.

In this embodiment of the present application, the UE is in a soft handover area, and a path loss from the UE to a micro cell is much smaller than a path loss from the UE to a macro cell. Because of power control, the UE may reduce transmit power to diminish impact on the micro cell. Therefore, a macro cell base station cannot receive the uplink feedback information from the UE, whereas a micro cell base station can still normally receive the uplink feedback information.

402. Receive an auxiliary scheduling indication sent by the macro cell base station.

The auxiliary scheduling indication is used to instruct the micro cell base station to start to send the uplink feedback information to the macro cell base station.

In an application scenario of the present application, the micro cell base station may send the uplink feedback information from the UE to the macro cell base station by using the following steps. Specific steps are as follows:
403. Take the uplink feedback information received from the UE as first uplink feedback information, and send the first uplink feedback information to the macro cell base station.

The first uplink feedback information includes at least one of the following: an acknowledgment/negative acknowledgment ACK/NACK indicator of a high speed dedicated physical control channel HS-DPCCH, a channel quality indicator CQI, and the like.

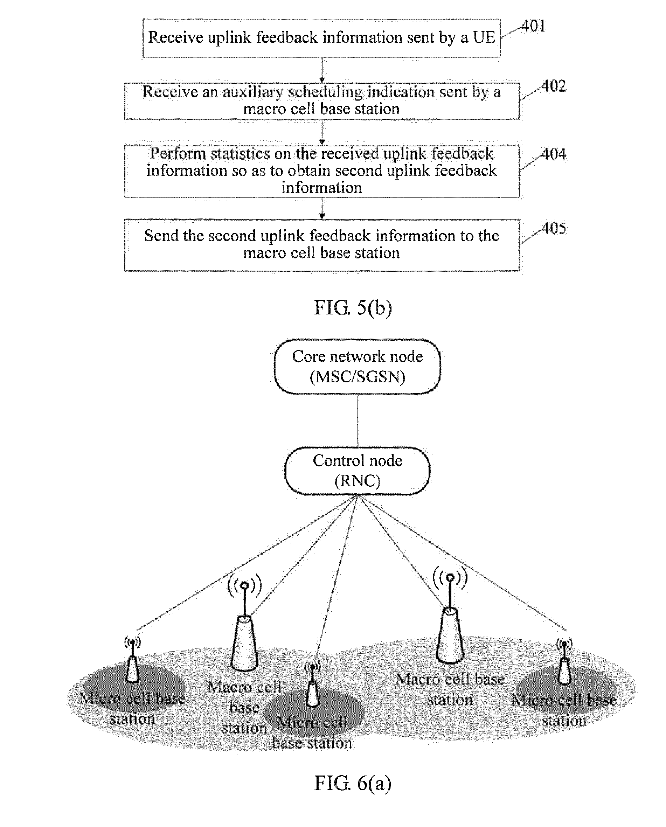

In another implementation scenario of this embodiment of the present application, as shown in FIG. 5(b), the micro cell base station sends the uplink feedback information from the UE to the macro cell base station at an interval of a specific statistics period, and therefore, the foregoing step 403 may be replaced with the following step:
404. Perform statistics on the received uplink feedback information so as to obtain second uplink feedback information.

The uplink feedback information is sent by the UE to the micro cell base station. A statistics period, in which statistics is performed on the uplink feedback information, may be pre-configured on the micro cell base station or may be delivered by a macro cell control node or a base station management system by using a specified indication to the micro cell base station, so that the micro cell base station configures the statistics period according to a parameter carried in the indication. Therefore, before the micro cell base station sends the second uplink feedback information to the macro cell base station, the method may further include: receiving, by the micro cell base station, configuration information delivered by the macro cell control node or the base station management system, and completing configuration. The configuration information includes a statistics period, and/or a form of the uplink feedback information, and/or specific content of the uplink feedback information, and the configuration information is delivered by the macro cell control node or configured by the base station management system, where the form of the uplink feedback information is the first uplink feedback information or the second uplink feedback information.

It may be understood that for different system architectures, different information transfer modes are used between the macro cell control node and the micro cell base station. The configuration information may be directly delivered by the macro cell control node to the micro cell base station or may be forwarded by another device connected to the macro cell control node and the micro cell base station and finally sent to the micro cell base station, so that the micro cell base station completes configuration of the statistics period, and/or the form of the uplink feedback information, and/or the specific content of the uplink feedback information.

405. Send the second uplink feedback information to the macro cell base station.

The second uplink feedback information may include at least one of the following: the number of acknowledgment/negative acknowledgment ACK/NACK indicators, a proportion of the acknowledgment/negative acknowledgment ACK/NACK indicators, an average value of channel quality indicators CQIs, and a value of the last CQI.

In this embodiment of the present application, it may be preset that the micro cell base station sends the uplink feedback information, or it may be preset that the micro cell base station sends the uplink feedback information in a form of a statistical result, or the macro cell base station delivers a specified instruction to instruct the micro cell base station to use one of the foregoing two forms. In addition, the specific content of the uplink feedback information may also be specified by the macro cell base station.

It should be noted that reference can be made to corresponding content in Embodiment 1 and Embodiment 2 for a detailed explanation of some steps in this embodiment of the present application. Details are not described herein again in this embodiment of the present application.

According to a data transmission method provided in another embodiment of the present application, a micro cell base station receives uplink feedback information from a UE, and a macro cell base station acquires the uplink feedback information sent by the micro cell base station. Compared with a technology of adding the micro cell base station to an active set of the UE in advance by expanding a soft handover area in the prior art, this method enables the macro cell base station to obtain correct uplink feedback information, so as to properly perform downlink data transmission.

To facilitate persons skilled in the art in understanding technical solutions of the present application, the data transmission method provided in the present application is illustrated in terms of three common architectures of a heterogeneous network.

### Architecture 1:

In the first architecture shown in FIG. 6(a), a micro cell base station and a macro cell base station share a same control node (RNC). In this case, the micro cell base station functions similar to the macro cell base station and directly interacts with the RNC through an Iub interface.

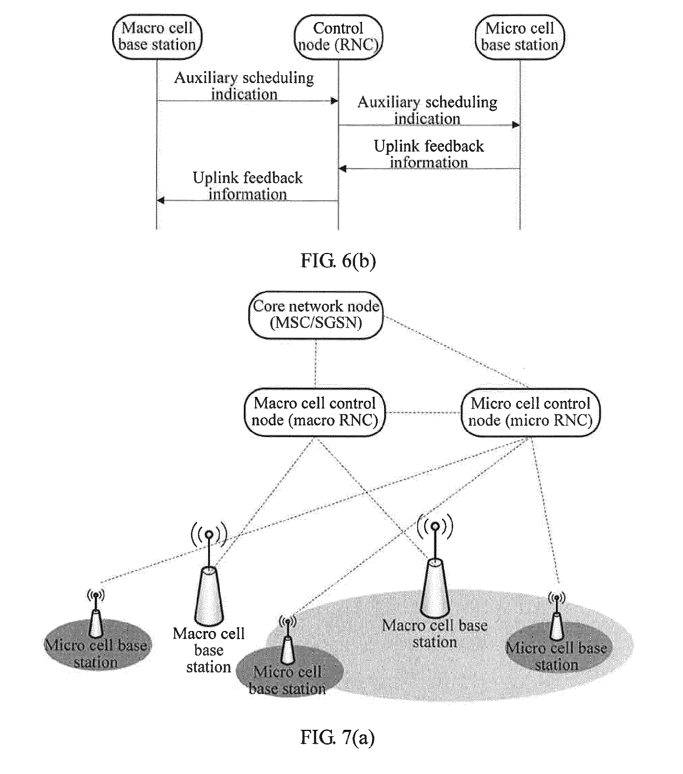

A data transmission method for architecture 1 is shown in FIG. 6(b): The macro cell base station sends an auxiliary scheduling indication to the micro cell base station by using the shared RNC, and the micro cell base station sends uplink feedback information from the UE to the macro cell base station by using the shared RNC.

### Architecture 2:

In the second architecture shown in FIG. 7(a), a micro cell base station is managed by an independent RNC (hereinafter referred to as a micro RNC). The micro RNC is connected to a macro RNC through an existing Iur interface, the micro cell base station is connected to the micro RNC through an Iub interface, and the micro RNC exchanges information with the macro RNC through the Iur interface.

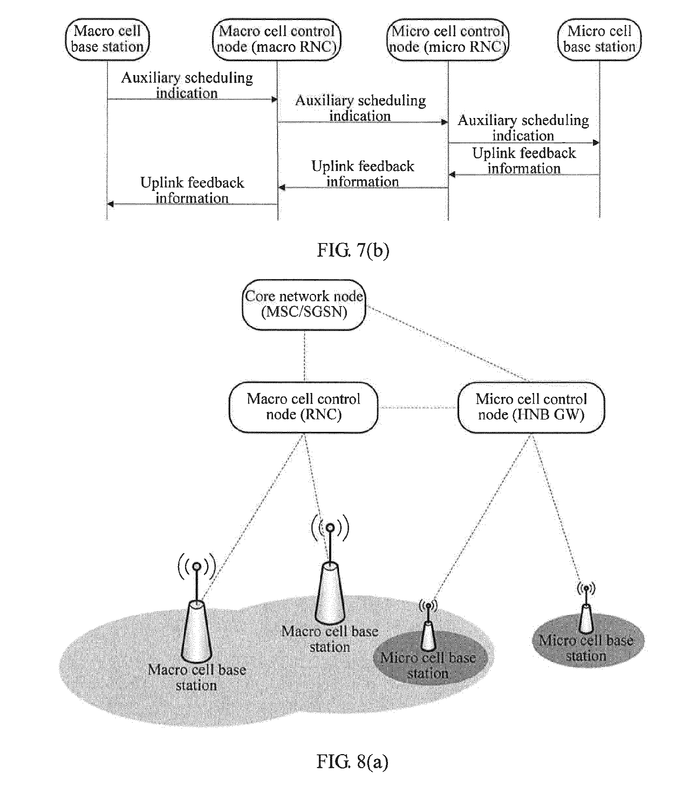

A data transmission method for architecture 2 is shown in FIG. 7(b): A macro cell base station sends an auxiliary scheduling indication to the macro RNC; the macro RNC forwards the auxiliary scheduling indication to the micro RNC; and finally the micro RNC sends the auxiliary scheduling indication to the micro cell base station, so that the micro cell base station starts to send uplink feedback information from a UE. The micro cell base station sends the uplink feedback information from the UE to the micro RNC; the micro RNC sends the uplink feedback information to the macro RNC; and the macro RNC further forwards the uplink feedback information to the macro cell base station.

In particular, for an architecture in which a micro cell base station has a dedicated micro cell RNC, such as the architecture in FIG. 7(a), when a statistical result is taken as second uplink feedback information and sent to the macro cell base station, the second uplink feedback information, that is, the statistical result, may be obtained by performing statistics by the micro cell base station according to received HS-DPCCH channel information of the UE; or HS-DPCCH channel information may be sent to the micro cell RNC, and the micro cell RNC performs statistics according to pre-configuration or configuration information sent by the macro RNC, takes a statistical result as second uplink feedback information, and transfers the second uplink feedback information to the macro RNC, so that the macro RNC forwards the second uplink feedback information to the macro cell base station.

### Architecture 3:

In the third architecture shown in FIG. 8(a), a micro cell base station implements functions of a radio network controller and a base station; a base station gateway (HNB GW) performs a convergence function; the micro cell base station is connected to the base station gateway through an Iuh or Iurh interface and connected to an RNC through an Iur interface. Information exchanged between the micro cell base station and the RNC needs to be forwarded by the base station gateway.

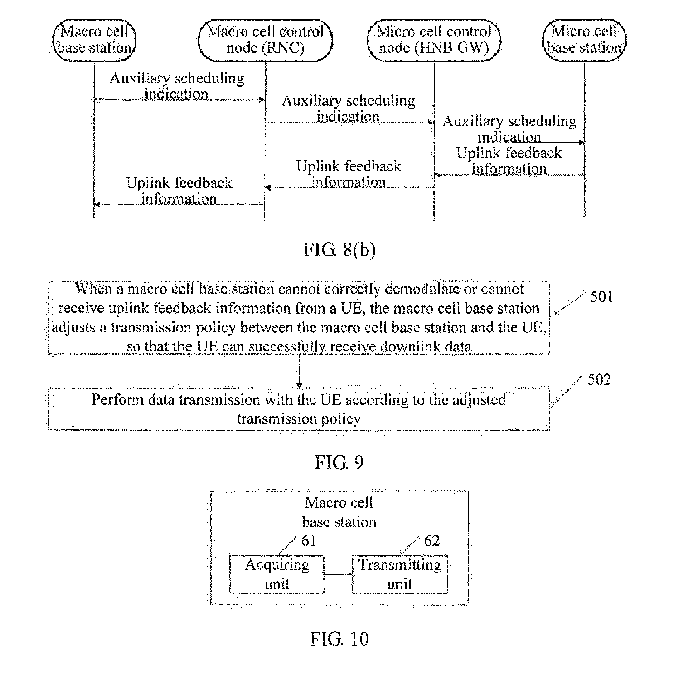

A data transmission method for architecture 3 is shown in FIG. 8(b): A macro cell base station sends an auxiliary scheduling indication to the RNC; then the RNC forwards the auxiliary scheduling indication to the base station gateway; and finally the base station gateway sends the auxiliary scheduling indication to the micro cell base station, so that the micro cell base station starts to send uplink feedback information from a UE. The micro cell base station sends the uplink feedback information from the UE to the base station gateway; the base station gateway sends the uplink feedback information to the RNC; and the RNC further forwards the uplink feedback information to the macro cell base station.

Another embodiment of the present application provides a data transmission method, which is applicable to a macro cell base station side. When a macro cell base station cannot correctly demodulate or cannot receive uplink feedback information from a UE, the macro cell base station may automatically adjust a downlink data transmission policy, so as to increase a success rate of data transmission between the macro cell base station and the UE.

Specifically, FIG. 9 is a schematic flowchart of a data transmission method according to another embodiment of the present application.

501. When a macro cell base station cannot correctly demodulate or cannot receive uplink feedback information from a UE, the macro cell base station adjusts a transmission policy between the macro cell base station and the UE, so that the UE can successfully receive the downlink data.

The uplink feedback information (for example, HS-DPCCH information) is scrambled by using user scrambling code. Following a specified time sequence, the macro cell base station receives uplink data from the UE and descrambles the received uplink data by using scrambling code corresponding to each UE. If no HS-DPCCH information of a corresponding UE is obtained after descrambling, it is considered that the uplink feedback information from the UE cannot be received. Alternatively, HS-DPCCH information of a corresponding UE is obtained by means of scrambling user scrambling code of the UE, but an error is found in the received HS-DPCCH information by using a cyclic redundancy check (Cycle Redundancy Check, CRC); and then it may be considered that the uplink feedback information from the UE cannot be correctly demodulated.

The adjusting a transmission policy between the macro cell base station and the UE includes at least one of the following: increasing transmit power of a high speed physical downlink shared channel (High-Speed Physical Downlink Shared Channel, HS-PDSCH); retransmitting same downlink data for multiple times; increasing a power ratio of an HS-DPCCH; increasing a feedback cycle of downlink data; and modifying a time sequence of current feedback data, so that the UE performs uplink feedback on same data for multiple times.

A specific adjustment method is described as follows:
Adjusting downlink transmit power of the HS-PDSCH: When the macro cell base station cannot receive or cannot correctly demodulate the uplink feedback information from the UE, the macro cell base station may increase the transmit power of the HS-PDSCH according to a specified step in a given time, so that the UE can successfully receive the downlink data; a specific increase of time and step may be preset according to power that needs to be adjusted actually; and certainly, when the uplink feedback information from the UE is properly received, the downlink transmit power of the HS-PDSCH may be reduced correspondingly to save energy.

Retransmitting same downlink data for multiple times: The number of retransmission times may be increased on the basis of from the current number of times of sending the downlink data; for example, the current number of times of sending the downlink data is 3 at most, and then the number of retransmission times may be adjusted to 4; same downlink data is sent repeatedly for multiple times, so that the UE can successfully receive the downlink data; and an optimal value of the retransmission times can be obtained by simulating a corresponding scenario.

Adjusting the power ratio of the HS-DPCCH: The power ratio of the HS-DPCCH is increased to a rated threshold value according to a fixed step, where the step of adjustment and the rated threshold value may be obtained by simulating a corresponding scenario, so that the UE successfully receives the downlink data sent by the macro cell base station.

Adjusting the feedback cycle of the downlink data: The feedback cycle of the downlink data is increased to a rated threshold value according to a fixed step; when the feedback cycle increases, the number of times of performing uplink feedback on the same data by the UE within the feedback cycle may increase; and the UE performs uplink feedback on the same data for multiple times, so that the macro cell base station successfully receives the uplink feedback information from the UE, where the step of adjustment and the rated threshold value may be obtained by simulating a corresponding scenario, so that the UE successfully receives the downlink data sent by the macro cell base station.

Modifying a time sequence of current feedback data: For example, the current time sequence is set as follows: After receiving the downlink data, the UE feeds back the HS-DPCCH information in 7.5 timeslots and the UE needs 3 timeslots for one feedback; after scheduling the downlink data, the macro cell base station starts to receive the HS-DPCCH after a wait of 7.5 timeslots, and continuously receives the HS-DPCCH in 3 timeslots; if the macro cell base station cannot receive or cannot correctly demodulate the HS-DPCCH information from the UE, a result of modification is as follows: A time in which the macro cell base station receives the HS-DPCCH is 6 timeslots, and in this way the UE is allowed to perform feedback twice in 6 timeslots, so that the UE can perform uplink feedback on the same data for multiple times; and a specific adjustment value of the time sequence may be obtained by simulating a corresponding scenario, so that the macro cell base station successfully receives the uplink feedback information from the UE.

502. Perform data transmission with the UE according to the adjusted transmission policy.

According to a data transmission method provided in another embodiment of the present application, when a macro cell base station cannot correctly demodulate or cannot receive uplink feedback information from a UE, the macro cell base station actively adjusts a transmission policy so as to increase a success rate of data transmission between the macro cell base station and the UE, thereby solving a data transmission failure problem that a macro cell base station cannot receive or cannot correctly demodulate an uplink signal of the UE when the UE is in a soft handover area.

Another embodiment of the present application provides a macro cell base station. As shown in FIG. 10, the macro cell base station includes: an acquiring unit 61 and a transmitting unit 62.

The acquiring unit 61 is configured to acquire uplink feedback information sent by a micro cell base station.

The transmitting unit 62 is configured to transmit downlink data to a UE according to the uplink feedback information.

In an implementation scenario of this embodiment of the present application, the uplink feedback information is specifically: first uplink feedback information that is received by the micro cell base station from the UE and sent to the macro cell base station. The first uplink feedback information includes at least one of the following: an acknowledgment/negative acknowledgment ACK/NACK indicator of a high speed dedicated physical control channel HS-DPCCH, a channel quality indicator CQI, and the like.

In another implementation scenario of this embodiment of the present application, the uplink feedback information is specifically: second uplink feedback information, which is a statistical result sent to the macro cell base station by the micro cell base station after the micro cell base station performs statistics on the uplink feedback information received from the UE. The second uplink feedback information includes at least one of the following: the number of acknowledgment/negative acknowledgment ACK/NACK indicators, a proportion of the acknowledgment/negative acknowledgment ACK/NACK indicators, an average value of channel quality indicators CQIs, a value of the last CQI, and the like.

Further, before the micro cell base station sends the uplink feedback information to the macro cell base station, the micro cell base station receives configuration information delivered by a macro cell control node or a base station management system and completes configuration. The configuration information includes a statistics period, and/or a form of the uplink feedback information, and/or specific content of the uplink feedback information, and the configuration information is delivered by the macro cell control node to the micro cell base station or configured by the base station management system, where the form of the uplink feedback information is the first uplink feedback information or the second uplink feedback information.

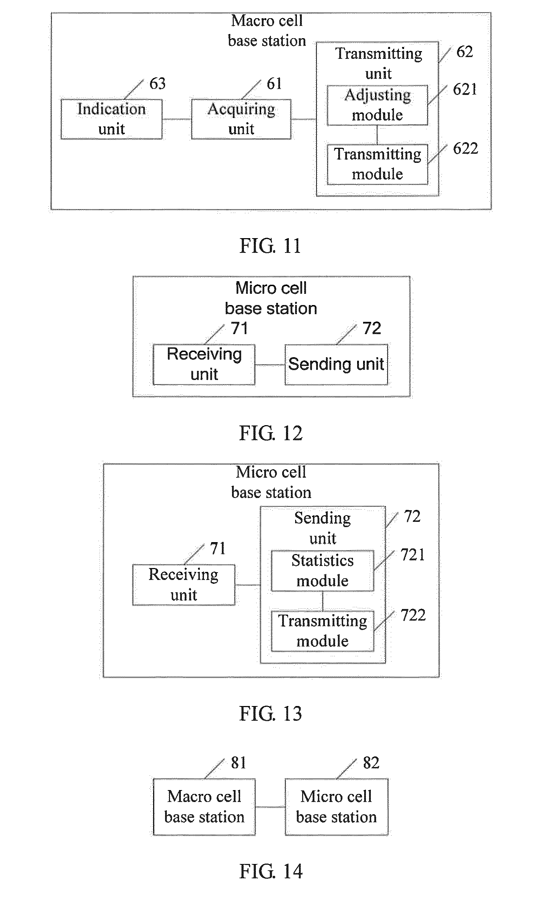

Further, as shown in FIG. 11, the macro cell base station may further include an indication unit 63, configured to send an auxiliary scheduling indication to the micro cell base station when the macro cell base station cannot correctly demodulate or cannot receive the uplink feedback information sent by the UE. The auxiliary scheduling indication is used to instruct the micro cell base station to start to send the uplink feedback information to the macro cell base station.

In this embodiment, a control signaling packet of a control plane carries the uplink feedback information, or a Frame Protocol FP packet of a data plane carries the uplink feedback information.

Further, the transmitting unit 62 may include an adjusting module 621 and a transmitting module 622.

The adjusting module 621 is configured to adjust a data block length and/or downlink transmit power of downlink data transmission according to the uplink feedback information, so that the UE can successfully receive the downlink data.

The transmitting module 622 is configured to transmit the downlink data to the UE according to the adjusted data block length and/or downlink transmit power.

Another embodiment of the present application further provides a micro cell base station. As shown in FIG. 12, the micro cell base station includes: a receiving unit 71 and a sending unit 72.

The receiving unit 71 is configured to receive uplink feedback information sent by a UE.

The sending unit 72 is configured to send the uplink feedback information to a corresponding macro cell base station, so that the macro cell base station transmits downlink data to the UE according to the uplink feedback information.

In an implementation scenario of another embodiment of the present application, the sending unit 72 is specifically configured to take the uplink feedback information received from the UE as first uplink feedback information, and send the first uplink feedback information to the macro cell base station. The first uplink feedback information includes at least one of the following: an acknowledgment/negative acknowledgment ACK/NACK indicator of a high speed dedicated physical control channel HS-DPCCH and a channel quality indicator CQI.

In another implementation scenario of another embodiment of the present application, as shown in FIG. 13, the sending unit 72 includes a statistics module 721 and a sending module 722.

The statistics module 721 is configured to perform statistics on the received uplink feedback information and take a statistical result as second uplink feedback information.

The sending module 722 is configured to send the second uplink feedback information to the macro cell base station.

The second uplink feedback information includes at least one of the following: the number of acknowledgment/negative acknowledgment ACK/NACK indicators, a proportion of the acknowledgment/negative acknowledgment ACK/NACK indicators, an average value of channel quality indicators CQIs, and a value of a last CQI.

Further, the receiving unit 71 is further configured to receive configuration information delivered by a macro cell control node or a base station management system, and complete configuration. The configuration information includes a statistics period, and/or a form of the uplink feedback information, and/or specific content of the uplink feedback information, and the configuration information is delivered by the macro cell control node to the micro cell base station or configured by the base station management system, where the form of the uplink feedback information is the first uplink feedback information or the second uplink feedback information. A control signaling packet of a control plane may carry the uplink feedback information, or a Frame Protocol FP packet of a data plane may carry the uplink feedback information.

Further, the sending unit 72 is further configured to, after an auxiliary scheduling indication sent by the macro cell base station is received, start to perform the sending the uplink feedback information to a corresponding macro cell base station.

Another embodiment of the present application further provides a data transmission system. As shown in FIG. 14, the data transmission system includes: a macro cell base station 81 and a micro cell base station 82.

The macro cell base station 81 is configured to acquire uplink feedback information sent by the micro cell base station 82 and transmit downlink data to a UE according to the uplink feedback information.

The micro cell base station 82 is configured to receive uplink feedback information sent by the UE and send the uplink feedback information to a corresponding macro cell base station 81, so that the macro cell base station 81 transmits the downlink data to the UE according to the uplink feedback information.

According to a macro cell base station, a micro cell base station, and a data transmission system provided in another embodiment of the present application, the micro cell base station receives uplink feedback information from a UE, and the macro cell base station acquires the uplink feedback information sent by the micro cell base station. Compared with a technology of adding the micro cell base station to an active set of the UE in advance by expanding a soft handover area in the prior art, this enables the macro cell base station to obtain correct uplink feedback information, so as to properly perform downlink data transmission.

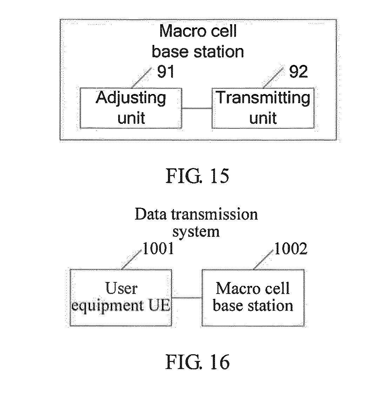

Another embodiment of the present application provides a macro cell base station. As shown in FIG. 15, the macro cell base station includes: an adjusting unit 91 and a transmitting unit 92.

The adjusting unit 91 is configured to, when the macro cell base station cannot correctly demodulate or cannot receive uplink feedback information from a UE, adjust a transmission policy between the macro cell base station and the UE, so that the UE can successfully receive the downlink data.

The transmitting unit 92 is configured to perform data transmission with the UE according to the adjusted transmission policy.

The adjusting a transmission policy between the macro cell base station and the UE includes at least one of the following: increasing transmit power of a high speed physical downlink shared channel HS-PDSCH; retransmitting same downlink data for multiple times; increasing a power ratio of an HS-DPCCH; increasing a feedback cycle of downlink data; and modifying a time sequence of current feedback data, so that the UE performs uplink feedback on same data for multiple times.

Another embodiment of the present application further provides a data transmission system. As shown in FIG. 16, the data transmission system includes: a user equipment UE 1001 and a macro cell base station 1002.

The UE 1001 is configured to send uplink feedback information to the macro cell base station 1002.

The macro cell base station 1002 is configured to, when the uplink feedback information from the UE 1001 cannot be correctly demodulated or cannot be received, adjust a transmission policy between the macro cell base station 1002 and the UE 1001 and perform data transmission with the UE 1001 according to the adjusted data transmission policy.

According to a macro cell base station provided in another embodiment of the present application, when uplink feedback information from a UE cannot be correctly demodulated or cannot be received, the macro cell base station actively adjusts a transmission policy so as to increase a success rate of data transmission between the macro cell base station and the UE, thereby solving a data transmission failure problem that a macro cell base station cannot receive or correctly demodulate an uplink signal of the UE when the UE is in a soft handover area.

It may be clearly understood by persons skilled in the art that, for the purpose of convenient and brief description, division of the foregoing functional modules is merely used as an example, and the foregoing functions may be assigned to different functional modules according to an actual need, that is, an internal structure of the apparatus is divided into different functional modules, to complete all or a part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. Furthermore, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, a network device, or the like) or a processor to perform all or a part of the steps of the methods described in the embodiments of the present application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present application other than limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present application.

## Claims

1. A data transmission method, comprising:
acquiring, by a macro cell base station, uplink feedback information sent by a micro cell base station; and
transmitting, by the macro cell base station, downlink data to a UE according to the uplink feedback information.

2. The data transmission method according to claim 1, wherein the uplink feedback information is specifically: first uplink feedback information that is received by the micro cell base station from the UE and sent to the macro cell base station.

3. The data transmission method according to claim 2, wherein the first uplink feedback information comprises at least one of the following: an acknowledgment/negative acknowledgment ACK/NACK indicator of a high speed dedicated physical control channel HS-DPCCH and a channel quality indicator CQI.

4. The data transmission method according to claim 1, wherein the uplink feedback information is specifically: second uplink feedback information, which is a statistical result sent to the macro cell base station by the micro cell base station after the micro cell base station performs statistics on the uplink feedback information received from the UE.

5. The data transmission method according to claim 4, wherein the second uplink feedback information comprises at least one of the following: the number of acknowledgment/negative acknowledgment ACK/NACK indicators, a proportion of the acknowledgment/negative acknowledgment ACK/NACK indicators, an average value of channel quality indicators CQIs, and a value of the last CQI.

6. The data transmission method according to any one of claims 1 to 5, wherein before the acquiring, by a macro cell base station, uplink feedback information sent by a micro cell base station, the method further comprises:
receiving, by the micro cell base station, configuration information delivered by a macro cell control node or a base station management system, and completing configuration, wherein:
the configuration information comprises a statistics period, and/or a form of the uplink feedback information, and/or specific content of the uplink feedback information, and the configuration information is delivered by the macro cell control node or configured by the base station management system, wherein the form of the uplink feedback information is the first uplink feedback information or the second uplink feedback information.

7. The data transmission method according to any one of claims 1 to 5, wherein before the acquiring, by a macro cell base station, uplink feedback information sent by a micro cell base station, the method further comprises:
sending an auxiliary scheduling indication to the micro cell base station when the macro cell base station cannot correctly demodulate or cannot receive the uplink feedback information sent by the UE, wherein the auxiliary scheduling indication is used to instruct the micro cell base station to send the uplink feedback information to the macro cell base station.

8. The data transmission method according to any one of claims 1 to 5, wherein a control signaling packet of a control plane carries the uplink feedback information, or a Frame Protocol FP packet of a data plane carries the uplink feedback information.

9. The data transmission method according to any one of claims 1 to 5, wherein the transmitting downlink data to a UE according to the uplink feedback information comprises:
adjusting, by the macro cell base station, a data block length and/or downlink transmit power of downlink data transmission according to the uplink feedback information, so that the UE can successfully receive the downlink data; and
transmitting, by the macro cell base station, the downlink data to the UE according to the adjusted data block length and/or downlink transmit power.

10. A data transmission method, comprising:
receiving, by a micro cell base station, uplink feedback information sent by a UE; and
sending, by the micro cell base station, the uplink feedback information to a corresponding macro cell base station, so that the macro cell base station transmits downlink data to the UE according to the uplink feedback information.

11. The data transmission method according to claim 10, wherein the sending, by the micro cell base station, the uplink feedback information to a corresponding macro cell base station is specifically:
taking, by the micro cell base station, the uplink feedback information received from the UE as first uplink feedback information, and sending the first uplink feedback information to the macro cell base station.

12. The data transmission method according to claim 11, wherein the first uplink feedback information comprises at least one of the following: an acknowledgment/negative acknowledgment ACK/NACK indicator of a high speed dedicated physical control channel HS-DPCCH and a channel quality indicator CQI.

13. The data transmission method according to claim 10, wherein the sending the uplink feedback information to a corresponding macro cell base station is specifically:
performing statistics on the received uplink feedback information and taking a statistical result as second uplink feedback information; and
sending the second uplink feedback information to the macro cell base station.

14. The data transmission method according to claim 13, wherein the second uplink feedback information comprises at least one of the following: the number of acknowledgment/negative acknowledgment ACK/NACK indicators, a proportion of the acknowledgment/negative acknowledgment ACK/NACK indicators, an average value of channel quality indicators CQIs, and a value of the last CQI.

15. The data transmission method according to any one of claims 10 to 14, wherein before the sending, by the micro cell base station, the uplink feedback information to a corresponding macro cell base station, the method further comprises:
receiving, by the micro cell base station, configuration information delivered by a macro cell control node or a base station management system, and completing configuration, wherein:
the configuration information comprises the statistics period, and/or a form of the uplink feedback information, and/or specific content of the uplink feedback information, and the configuration information is delivered by the macro cell control node to the micro cell base station or configured by the base station management system, wherein the form of the uplink feedback information is the first uplink feedback information or the second uplink feedback information.

16. The data transmission method according to any one of claims 10 to 14, wherein before the sending, by the micro cell base station, the uplink feedback information to a corresponding macro cell base station, the method further comprises:
after an auxiliary scheduling indication sent by the macro cell base station is received, starting to perform the sending the uplink feedback information to a corresponding macro cell base station.

17. The data transmission method according to any one of claims 10 to 14, wherein a control signaling packet of a control plane carries the uplink feedback information, or a Frame Protocol FP packet of a data plane carries the uplink feedback information.

18. A data transmission method, comprising:
when a macro cell base station cannot correctly demodulate or cannot receive uplink feedback information from a UE, adjusting a transmission policy between the macro cell base station and the UE, so that the UE can successfully receive the downlink data; and
performing, by the macro cell base station, data transmission with the UE according to the adjusted transmission policy.

19. The data transmission method according to claim 18, wherein the adjusting a transmission policy between the macro cell base station and the UE comprises at least one of the following:
increasing transmit power of a high speed physical downlink shared channel HS-PDSCH;
retransmitting same downlink data for multiple times;
increasing a power ratio of an HS-DPCCH;
increasing a feedback cycle of the downlink data; and
modifying a time sequence of current feedback data, so that the UE performs uplink feedback on same data for multiple times.

20. A macro cell base station, comprising:
an acquiring unit, configured to acquire uplink feedback information sent by a micro cell base station; and
a transmitting unit, configured to transmit downlink data to a UE according to the uplink feedback information.

21. The macro cell base station according to claim 20, wherein the uplink feedback information is specifically: first uplink feedback information that is received by the micro cell base station from the UE and sent to the macro cell base station.

22. The macro cell base station according to claim 21, wherein the first uplink feedback information comprises at least one of the following: an acknowledgment/negative acknowledgment ACK/NACK indicator of a high speed dedicated physical control channel HS-DPCCH and a channel quality indicator CQI.

23. The macro cell base station according to claim 20, wherein the uplink feedback information is specifically: second uplink feedback information, which is a statistical result sent to the macro cell base station by the micro cell base station after the micro cell base station performs statistics on the uplink feedback information received from the UE.

24. The macro cell base station according to claim 23, wherein the second uplink feedback information comprises at least one of the following: the number of acknowledgment/negative acknowledgment ACK/NACK indicators, a proportion of the acknowledgment/negative acknowledgment ACK/NACK indicators, an average value of channel quality indicators CQIs, and a value of the last CQI.

25. The macro cell base station according to any one of claims 20 to 24, wherein the micro cell base station receives configuration information delivered by a macro cell control node or a base station management system and completes configuration, wherein:
the configuration information comprises a statistics period, and/or a form of the uplink feedback information, and/or specific content of the uplink feedback information, and the configuration information is delivered by the macro cell control node to the micro cell base station or configured by the base station management system, wherein the form of the uplink feedback information is the first uplink feedback information or the second uplink feedback information.

26. The macro cell base station according to any one of claims 20 to 24, further comprising:
an indication unit, configured to send an auxiliary scheduling indication to the micro cell base station when the macro cell base station cannot correctly demodulate or cannot receive the uplink feedback information sent by the UE, wherein the auxiliary scheduling indication is used to instruct the micro cell base station to start to send the uplink feedback information to the macro cell base station.

27. The macro cell base station according to any one of claims 20 to 24, wherein a control signaling packet of a control plane carries the uplink feedback information, or a Frame Protocol FP packet of a data plane carries the uplink feedback information.

28. The macro cell base station according to any one of claims 20 to 24, wherein the transmitting unit comprises:
an adjusting module, configured to adjust a data block length and/or downlink transmit power of downlink data transmission according to the uplink feedback information, so that the UE can successfully receive the downlink data; and
a transmitting module, configured to transmit the downlink data to the UE according to the adjusted data block length and/or downlink transmit power.

29. A micro cell base station, comprising:
a receiving unit, configured to receive uplink feedback information sent by a UE; and
a sending unit, configured to send the uplink feedback information to a corresponding macro cell base station, so that the macro cell base station transmits downlink data to the UE according to the uplink feedback information.

30. The micro cell base station according to claim 29, wherein the sending unit is specifically configured to:
take the uplink feedback information received from the UE as first uplink feedback information and send the first uplink feedback information to the macro cell base station.

31. The micro cell base station according to claim 30, wherein the first uplink feedback information comprises at least one of the following: an acknowledgment/negative acknowledgment ACK/NACK indicator of a high speed dedicated physical control channel HS-DPCCH and a channel quality indicator CQI.

32. The micro cell base station according to claim 29, wherein the sending unit comprises:
a statistics module, configured to perform statistics on the received uplink feedback information and take a statistical result as second uplink feedback information; and
a sending module, configured to send the second uplink feedback information to the macro cell base station.

33. The micro cell base station according to claim 32, wherein the second uplink feedback information comprises at least one of the following: the number of acknowledgment/negative acknowledgment ACK/NACK indicators, a proportion of the acknowledgment/negative acknowledgment ACK/NACK indicators, an average value of channel quality indicators CQIs, and a value of the last CQI.

34. The micro cell base station according to any one of claims 29 to 33, wherein the receiving unit is further configured to receive configuration information delivered by a macro cell control node or a base station management system, and complete configuration, wherein:
the configuration information comprises a statistics period, and/or a form of the uplink feedback information, and/or specific content of the uplink feedback information, and the configuration information is delivered by the macro cell control node to the micro cell base station or configured by the base station management system, wherein the form of the uplink feedback information is the first uplink feedback information or the second uplink feedback information.

35. The micro cell base station according to any one of claims 29 to 33, wherein the sending unit is further configured to, after an auxiliary scheduling indication sent by the macro cell base station is received, start to perform the sending the uplink feedback information to a corresponding macro cell base station.

36. The micro cell base station according to any one of claims 29 to 33, wherein a control signaling packet of a control plane carries the uplink feedback information, or a Frame Protocol FP packet of a data plane carries the uplink feedback information.

37. A macro cell base station, comprising:
an adjusting unit, configured to, when a macro cell base station cannot correctly demodulate or cannot receive uplink feedback information from a UE, adjust a transmission policy between the macro cell base station and the UE, so that the UE can successfully receive the downlink data; and
a transmitting unit, configured to perform data transmission with the UE according to the adjusted transmission policy.

38. The macro cell base station according to claim 37, wherein the adjust the transmission policy between the macro cell base station and the UE comprises at least one of the following:
increasing transmit power of a high speed physical downlink shared channel HS-PDSCH; retransmitting same downlink data for multiple times; increasing a power ratio of an HS-DPCCH; increasing a feedback cycle of downlink data; and modifying a time sequence of current feedback data, so that the UE performs uplink feedback on same data for multiple times.

39. A data transmission system, comprising:
the macro cell base station according to any one of claims 20 to 28; and
the micro cell base station according to any one of claims 29 to 36.
